# EUROPEAN PATENT APPLICATION

(11) **EP 4 741 199 A1**
(43) Date of publication of application: **13.05.2026**
(21) Application number: 25210314.8
(22) Date of filing: 22.10.2025
(51) Int. Cl.: B60K 1/04, B62D 21/17

(54) **VEHICLE LOWER PORTION STRUCTURE**

(30) Priority: 07.11.2024 JP 2024194950
(71) Applicant: TOYOTA JIDOSHA KABUSHIKI KAISHA, Toyota-shi, Aichi-ken 471-8571 (JP)
(72) Inventor: MOTOI, Daisuke, TOYOTA-SHI, AICHI-KEN, 471-8571 (JP)
(74) Representative: Cabinet Beau de Loménie

(57) **Abstract**

A vehicle lower portion structure has a pair of rocker portions (40) extending in a vehicle longitudinal direction and separated from one another in a vehicle transverse direction; a battery case (32) that has joint portions (100) joined to the rocker portions (40), that is disposed between the pair of rocker portions (40), and in which battery cells (31) are accommodated; an underpanel (50) covering the battery case (32) and the pair of rocker portions (40) from a vehicle lower side; and accommodation portions (60) provided between the battery case (32) and the rocker portions (40), further toward vehicle transverse direction inner sides than the joint portions (100) and at an upper side of the underpanel (50). High-voltage cables (62) that extend in the vehicle longitudinal direction are accommodated in the accommodation portions (60).

## Description

### BACKGROUND

### Technical Field

The present disclosure relates to a vehicle lower portion structure.

### Related Art

Japanese Patent Application Laid-Open (JP-A) No. 2023-051652 discloses a vehicle in which a battery is installed in the lower portion of the vehicle. In this vehicle, a protruding portion that projects upwardly is provided at the vehicle transverse direction center of the case cover of the battery, and auxiliary machinery of the battery is accommodated in this protruding portion.

Studies have been carried out on ensuring space for accommodation harnesses and the like at the lateral sides of a battery case, from the standpoint of enlarging the accommodation space at the lower portion of a vehicle. In this case, it is preferable that an accommodated object be protected from the rocker portion that moves toward the vehicle transverse direction inner side at the time of a side collision.

### SUMMARY

In view of the above-described circumstances, an object of the present disclosure is to provide a vehicle lower portion structure that, in a vehicle in which accommodation portions are provided at the lateral sides of a battery case, can protect an accommodated object at the time of a side collision.

A vehicle lower portion structure relating to a first aspect includes: a pair of rocker portions extending in a vehicle longitudinal direction and separated from one another in a vehicle transverse direction; a battery case that has joint portions joined to the rocker portions, and that is disposed between the pair of rocker portions, and in which battery cells are accommodated; an underpanel covering the battery case and the pair of rocker portions from a vehicle lower side; and accommodation portions provided between the battery case and the rocker portions, further toward vehicle transverse direction inner sides than the joint portions and at an upper side of the underpanel, wherein accommodated objects that extend in the vehicle longitudinal direction are accommodated in the accommodation portions.

In the vehicle lower portion structure relating to the first aspect, the accommodation portions are provided between the battery case and the rocker portions. Due thereto, the accommodation space of the vehicle lower portion can be enlarged.

Further, in the above-described structure, the accommodation portions are provided further toward the vehicle transverse direction inner sides than the joint portions of the rocker portions and the battery case. In a case in which a colliding body collides with a lateral side portion (in other words, a vehicle transverse direction outer side portion) of the vehicle (hereinafter called "at the time of a side collision"), the collision load is inputted to a rocker portion. The rocker portion to which load is inputted is pressed toward the vehicle transverse direction inner side, but the movement thereof toward the vehicle transverse direction inner side is suppressed at the joint portion. In this way, movement of the rocker portion toward the vehicle transverse direction inner side is suppressed at the joint portion that is provided further toward the vehicle transverse direction outer side than the accommodation portion, and therefore, deformation of the accommodation portion can be suppressed. Consequently, the accommodated object that is accommodated in the accommodation portion can be protected.

Further, in the above-described structure, the underpanel covers the battery case and the rocker portions from the vehicle lower side, and the accommodation portions are provided between the battery case and the rocker portions. In this way, in the above-described structure, the vehicle transverse direction outer side end portions of the underpanel are positioned further toward the vehicle transverse direction outer sides than the accommodation portions. Due thereto, at the time of a side collision, the collision load is inputted to the underpanel before the accommodation portion. Some of the collision load is inputted to the underpanel in this way. Accordingly, the collision load at the time of a side collision is dispersed to the rocker portion and the underpanel, and it is difficult for the accommodation portion to deform. Accordingly, the accommodated object that is accommodated in the accommodation portion can be protected.

In a vehicle lower portion structure relating to a second aspect, in the first aspect, the underpanel is joined to the rocker portions.

In the vehicle lower portion structure relating to the second aspect, the underpanel is joined to the lower portions of the rocker portions. Due thereto, at the time of a side collision, movement of the rocker portion toward the vehicle transverse direction inner side is suppressed by the underpanel as well. Accordingly, it is more difficult for the rocker portion and the accommodation portion to interfere with one another. Consequently, deformation of the accommodation portion is suppressed more, and the accommodated object that is accommodated in the accommodation portion can be protected more effectively.

In a vehicle lower portion structure relating to a third aspect, in the second aspect, the rocker portions have closed cross-sectional portions that are hollow and whose cross-sections, as sectioned along planes orthogonal to the vehicle longitudinal direction, are closed cross-sections, and flange portions that are plate-shaped and that are provided at lower sides of the closed cross-sectional portions, and the underpanel is joined to the flange portions.

In the vehicle lower portion structure relating to the third aspect, the rocker portions have the closed cross-sectional portions that are hollow, and the flange portions that are provided at the lower sides of the closed cross-sectional portions. At the time of a side collision, the closed cross-sectional portion of the rocker portion is displaced so as to be crushed, and absorbs the impact. Accordingly, even if impact is inputted to the flange portion after the closed cross-sectional portion absorbs impact, the displacement of the flange portion is relatively small. In the above-described structure, the underpanel is joined to the flange portions whose displacement is relatively small at the time of a side collision. Due thereto, at the time of a side collision, movement of the rocker portion toward the vehicle transverse direction inner side is suppressed more. Consequently, it is more difficult for the rocker portion and the accommodation portion to interfere with one another. Consequently, deformation of the accommodation portion is suppressed more, and the accommodated object that is accommodated in the accommodation portion can be protected more effectively.

In a vehicle lower portion structure relating to a fourth aspect, in the third aspect, the flange portions have vertical wall portions extending in a vehicle vertical direction, and horizontal wall portions extending in the vehicle transverse direction from the vertical wall portions, and the underpanel is joined to the horizontal wall portions.

The horizontal wall portion extends in the vehicle transverse direction. Namely, the length of the horizontal wall portion in the vehicle transverse direction is long. Accordingly, with respect to load in the vehicle transverse direction, the section modulus of the horizontal wall portion is large, and the rigidity of the horizontal wall portion is relatively high. In the vehicle lower portion structure relating to the fourth aspect, the horizontal wall portion whose rigidity is high is joined to the underpanel. Due thereto, the rigidity of the joint portion of the underpanel and the rocker portion can be improved. Accordingly, movement of the rocker portion toward the vehicle transverse direction inner side is suppressed more. Consequently, it is more difficult for the rocker portion and the accommodation portion to interfere with one another. Consequently, deformation of the accommodation portion is suppressed more, and the accommodated object that is accommodated in the accommodation portion can be protected more effectively.

In a vehicle lower portion structure relating to a fifth aspect, in any of the first aspect through the fourth aspect, the rocker portions have rocker inners and rocker outers provided further toward vehicle transverse direction outer sides than the rocker inners, and lower end portions of the rocker outers are disposed further toward a vehicle lower side than lower end portions of the rocker inners, and the accommodation portions are provided at vehicle lower sides of the rocker inners and at vehicle transverse direction inner sides of the rocker outers, and end portions of the underpanel are joined to lower portions of the rocker outers.

In the vehicle lower portion structure relating to the fifth aspect, the accommodation portions are provided at the vehicle lower sides of the rocker inners. Further, in the above-described structure, the accommodation portions are provided at the vehicle transverse direction inner sides of the rocker outers. In this way, the vehicle upper sides of the accommodation portions are covered by the rocker inners, and the vehicle transverse direction outer sides of the accommodation portions are covered by the rocker outers. Accordingly, deformation of the accommodation portions can be suppressed more effectively. Consequently, the accommodated objects that are accommodated in the accommodation portions can be protected more effectively.

In a vehicle lower portion structure relating to a sixth aspect, in the fifth aspect, a bending rigidity of the rocker inners is higher than a bending rigidity of the rocker outers.

In the vehicle lower portion structure relating to the sixth aspect, the bending rigidity of the rocker inners is higher than the bending rigidity of the rocker outers. Due thereto, at the time of a side collision, the rocker outer whose a bending rigidity is low deforms before the rocker inner, and carries out impact absorption. Accordingly, because the load transmitted to the accommodation portion that is provided at the lower side of the rocker inner is reduced, deformation of the accommodation portion can be suppressed more effectively. Consequently, the accommodated object that is accommodated in the accommodation portion can be protected more effectively.

In a vehicle lower portion structure relating to a seventh aspect, in the fifth aspect or the sixth aspect, the joint portions of the battery case are provided further toward vehicle transverse direction inner sides than the rocker outers.

In the vehicle lower portion structure relating to the seventh aspect, the joint portions of the battery case and the rocker portions are provided further toward the vehicle transverse direction inner sides than the rocker outers. Due thereto, at the time of a side collision, after the rocker outer has absorbed impact, movement of the rocker portion toward the vehicle transverse direction inner side is suppressed at the joint portion. Accordingly, the load inputted to the joint portion can be suppressed, and therefore, movement of the rocker portion is suppressed more effectively. Consequently, it is more difficult for the rocker portion and the accommodation portion to interfere with one another. Accordingly, deformation of the accommodation portion is suppressed more, and the accommodated object that is accommodated in the accommodation portion can be protected.

In a vehicle lower portion structure relating to an eighth aspect, the vehicle lower portion structure relating to the seventh aspect includes joining members that join the battery case with the rocker inners, wherein the joining members are inserted, from a vehicle lower side, through through-holes formed in the underpanel, and a diameter of the through-holes is larger than a diameter of the joining members.

In the vehicle lower portion structure relating to the eighth aspect, the battery case and the rocker inners are joined by the joining members that are inserted through the through-holes of the underpanel. Due thereto, at the time of a side collision, the load inputted to the underpanel is inputted to the battery case via the joining member. Accordingly, at the time of a side collision, deformation of the underpanel can be suppressed, and therefore, accompanying this, deformation of the accommodation portion can be suppressed. Accordingly, the accommodated object that is accommodated in the accommodation portion can be protected.

Further, in the vehicle lower portion structure of the eighth aspect, the diameters of the through-holes are larger than the diameters of the joining members. Namely, a gap is formed between the edge of the through-hole and the joining member. Due thereto, the work of joining the battery case and the rocker inner can be carried out through this gap via the battery case and the rocker inner. Accordingly, the work of joining the battery case and the rocker inner can be carried out in the state in which the battery case and the underpanel are fixed. Consequently, the work of assembling the vehicle lower portion structure can be facilitated.

In a vehicle lower portion structure relating to a ninth aspect, the vehicle lower portion structure relating to the eighth aspect includes rocker moldings covering the underpanel from vehicle transverse direction outer sides, wherein the joining members also serve as mounting members that mount the rocker moldings to the underpanel.

In the vehicle lower portion structure relating to the ninth aspect, the rocker moldings that cover the underpanel from the vehicle transverse direction outer sides are provided.

Due thereto, the lower sides of the accommodation portions are covered by the underpanel, and the vehicle transverse direction outer sides of the accommodation portions are covered by the rocker moldings. Accordingly, the accommodated objects accommodated in the accommodation portions can be protected from, for example, water drops on the road or the like.

In a vehicle lower portion structure relating to a tenth aspect, in any of the first aspect through the ninth aspect, the accommodated objects have cables.

It is easy for impact to be inputted to the vehicle transverse direction outer side region of the battery case at the time of a side collision. On the other hand, as described above, in the vehicle lower portion structure relating to the tenth aspect, damage to the accommodated object at the time of a side collision can be suppressed. Due thereto, even if high-voltage cables are accommodated as the accommodated objects in the accommodation portions that are at the vehicle transverse direction outer sides of the battery case, damage to the cables is suppressed, and safety can be improved.

In a vehicle lower portion structure relating to an eleventh aspect, in any of the first aspect through the tenth aspect, the accommodation portions are provided further toward vehicle transverse direction inner sides and a vehicle lower side than the joint portions.

In the vehicle lower portion structure relating to the eleventh aspect, the accommodation portions are provided further toward the vehicle transverse direction inner sides and the vehicle lower side than the joint portions. Due thereto, the battery case can be joined to the rocker portions in a state in which accommodated objects have been accommodated in the accommodation portions in advance and the underpanel has been mounted to the battery case. Accordingly, the work of assembling the vehicle lower portion structure can be simplified.

In a vehicle lower portion structure relating to a twelfth aspect, in any of the first aspect through the eleventh aspect, the battery case has an accommodation space definition portion that defines a battery accommodation space in which the battery cells are accommodated, and projecting portions projecting toward vehicle transverse direction outer sides from the accommodation space definition portion, and the joint portions are provided at the projecting portions.

In the vehicle lower portion structure relating to the twelfth aspect, at the battery case, the joint portions of the rocker portions and the battery case are provided at the projecting portions that project out toward the vehicle transverse direction outer sides from the accommodation space definition portion. In this way, because the joint portions are provided at portions that project out toward the vehicle transverse direction outer sides, the positions of the joint portions can easily be set further toward the vehicle transverse direction outer sides than the accommodation portions.

As described above, the vehicle lower portion structure relating to the present disclosure has the excellent effect of being able to protect an accommodated object at the time of a side collision, in a vehicle in which accommodation portions are provided at the lateral sides of a battery case.

### BRIEF DESCRIPTION OF THE DRAWINGS

Exemplary embodiments of the present invention will be described in detail based on the following figures, wherein:
Fig. 1 is a schematic plan view illustrating a vehicle to which a vehicle lower portion structure relating to a present embodiment is applied;
Fig. 2 is an exploded perspective view illustrating a battery pack and rocker portions relating to the present embodiment; and
Fig. 3 is a schematic sectional view seen in the direction of the arrows of line A-A of Fig. 1.

### DETAILED DESCRIPTION

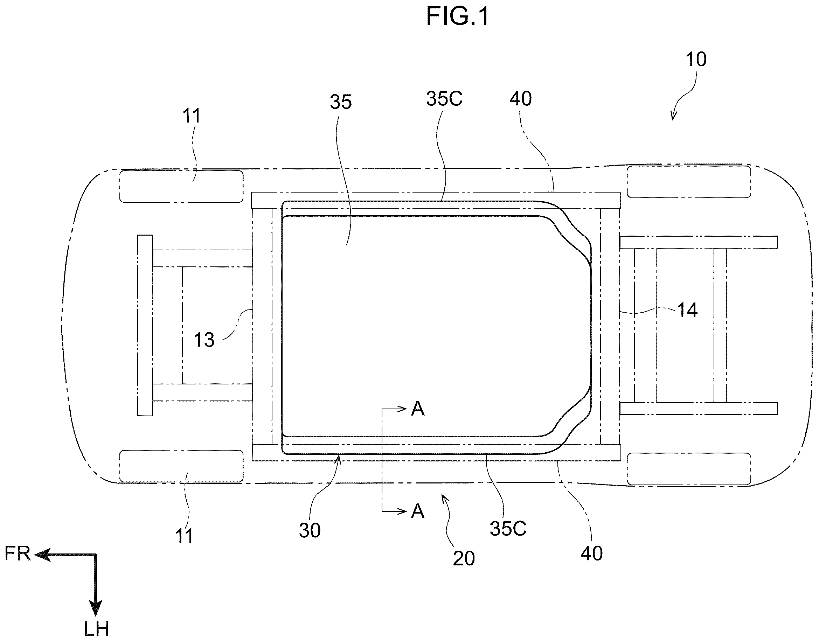

An embodiment of a vehicle lower portion structure relating to the present disclosure is described hereinafter with reference to Fig. 1 through Fig. 3. Note that arrow FR that is shown appropriately in the respective drawings indicates the vehicle forward direction that is the front side in the vehicle longitudinal direction, arrow UP indicates the vehicle upward direction that is the upper side in the vehicle vertical direction, and arrow OUT indicates an outer side in the vehicle transverse direction. Longitudinal direction, transverse direction and vertical direction in the following description indicate the vehicle longitudinal direction, the vehicle transverse direction and the vehicle vertical direction, respectively. Further, arrow LH shown in the respective drawings means the leftward direction in a state of facing in the vehicle frontward direction.

### [Vehicle]

As illustrated in Fig. 1, a vehicle 10 to which the vehicle lower portion structure relating to the present embodiment is applied is, for example, a battery electric vehicle (BEV) in which a battery pack 30 is installed. The vehicle 10 travels due to driving force being generated by the rotational driving of a motor for traveling (not illustrated) by electric power supplied from the battery pack 30, and the driving force generated by the motor for traveling being transmitted to front wheels 11. Note that vehicles to which the vehicle lower portion structure relating to the present embodiment can be applied are not limited to BEVs. For example, the vehicle lower portion structure relating to the present embodiment may be applied to a hybrid vehicle (HV) or a plug-in hybrid vehicle (PHEV).

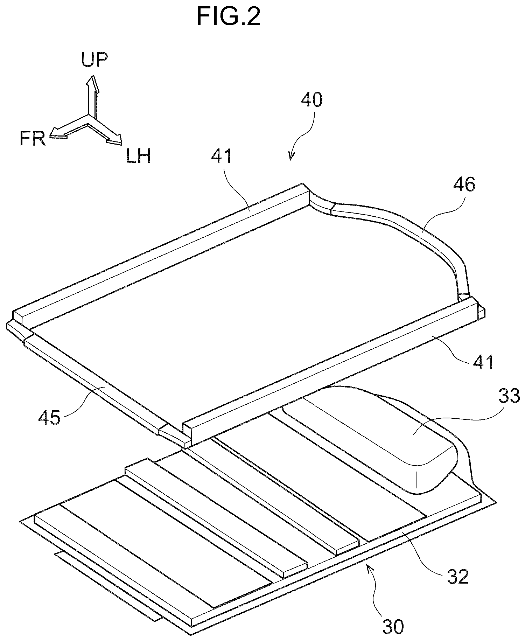

As illustrated in Fig. 1, the battery pack 30 is mounted at the lower side of a floor panel 12 (see Fig. 2) that structures the floor portion of the passenger compartment. As seen in a plan view, the battery pack 30 is formed in a substantially rectangular parallelopiped shape whose length direction is the longitudinal direction, and the rear end portion thereof is curved so as to protrude rearward.

In detail, a pair of left and right rocker portions 40 are disposed at the vehicle transverse direction outer sides of the floor panel 12 of the vehicle 10. The front end portions of the pair of left and right rocker portions 40 are connected by a front cross member 13 that has a rectangular, closed cross-sectional shape and extends in the vehicle transverse direction. The rear end portions of the left and right rocker portions 40 are connected by a rear cross member 14 that has a rectangular, closed cross-sectional shape and extends in the vehicle transverse direction. The battery pack 30 is disposed between the pair of left and right rocker portions 40, and is disposed between the front cross member 13 and the rear cross member 14.

### [Vehicle Lower Portion Structure]

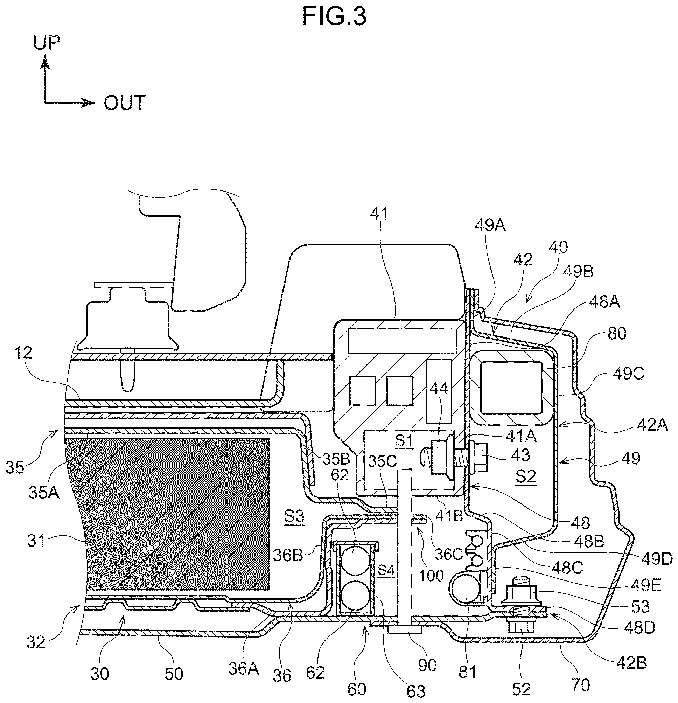

The vehicle lower portion structure that is applied to the lower portion of the vehicle 10 is described next by using Fig. 2 and Fig. 3. The vehicle lower portion structure relating to the present embodiment has plane symmetry across the vertical plane at the vehicle transverse direction center. In the following description, mainly the left side of the vehicle lower portion structure is described, and description of the right side is omitted as appropriate.

As illustrated in Fig. 3, the vehicle lower portion structure has the rocker portions 40 provided at the vehicle transverse direction outer sides, the battery pack 30 provided at the vehicle transverse direction inner sides of the rocker portions 40, an underpanel 50 provided at the lower sides of the rocker portions 40 and the battery pack 30, accommodation portions 60 that are provided at the vehicle transverse direction outer sides of the battery pack 30 and in which accommodation spaces S4 are provided, and rocker moldings 70 provided at the vehicle transverse direction outer sides of the accommodation portions 60.

The rocker portions 40 are provided at the vehicle transverse direction both side portions. Namely, a pair of the rocker portions 40 are provided, and the pair of rocker portions 40 are provided so as to be separated in the vehicle transverse direction.
The rocker portions 40 extend in the vehicle longitudinal direction. As illustrated in Fig. 3, the rocker portion 40 has a rocker inner 41 and a rocker outer 42 that is provided at the vehicle transverse direction outer side of the rocker inner 41. The rocker inner 41 and the rocker outer 42 are fixed by a rocker bolt 43 and a rocker nut 44. The bending rigidity of the rocker inner 41 is set to be higher than the bending rigidity of the rocker outer 42.

As illustrated in Fig. 2, a pair of the rocker inners 41 are provided so as to be separated in the vehicle transverse direction. The respective rocker inners 41 extend in rectilinear forms along the vehicle longitudinal direction. The front end portions of the pair of rocker inners 41 are connected by a front side connecting portion 45 that extends rectilinearly in the vehicle transverse direction. Further, the rear end portions of the pair of rocker inners 41 are connected by a rear side connecting portion 46 that extends in the vehicle transverse direction and whose vehicle transverse direction central portion is curved so as to protrude toward the vehicle rear side. The pair of rocker inners 41, the front side connecting portion 45 and the rear side connecting portion 46 form a frame body. The battery pack 30 is disposed at the inner side of this frame body.

The cross-section, which is cut along a plane orthogonal to the vehicle longitudinal direction (hereinafter simply called "cross-section"), of the rocker inner 41 is uniform. The outer shape of the cross-section of the rocker inner 41 is a shape that is substantially rectangular and whose vehicle transverse direction inner side and lower side are concave. Plural spaces are provided at the interior of the rocker inner 41. In the following description, the space that is provided furthest downward among the plural spaces provided at the interior of the rocker inner 41 is called a "lower side space S1". A through-hole (no reference numeral given thereto) that passes-through in the vehicle transverse direction is formed in an outer side wall portion 41A that prescribes the vehicle transverse direction outer side of the lower side space S1. The rocker bolt 43 is inserted through this through-hole. The distal end of the rocker bolt 43 and the rocker nut 44 that is screwed together with this distal end are accommodated in the lower side space S 1. Further, a through-hole (no reference numeral given thereto) that passes-through in the vehicle vertical direction is formed in a lower side wall portion 41B that prescribes the lower side of the lower side space S1. A joining member that is described later is inserted through this through-hole. The distal end of the joining member is accommodated in the lower side space S1.

The rocker outer 42 is an elongated member that extends in the vehicle longitudinal direction, and the shape of the cross-section thereof is uniform. The rocker outer 42 has an inner side panel 48 abutting the vehicle transverse direction outer side surface of the rocker inner 41, and an outer side panel 49 provided at the vehicle transverse direction outer side of the inner side panel 48. A portion of the inner side panel 48 and a portion of the outer side panel 49 are separated in the vehicle transverse direction. The lower end portion of the rocker outer 42 is disposed further toward the lower side than the lower end portion of the rocker inner 41.

An outer side space S2 is provided between the inner side panel 48 and the outer side panel 49. The outer side space S2 is a closed cross-section in cross-section. The head portion of the rocker bolt 43 is accommodated in the outer side space S2. Further, an energy absorbing body 80 is accommodated in the outer side space S2. The energy absorbing body 80 is provided in the upper portion of the outer side space S2. The energy absorbing body 80 is provided further toward the upper side than the rocker bolt 43. The energy absorbing body 80 is a member made of metal at whose interior a space is provided, and absorbs impact by being crushed.

The inner side panel 48 is a plate-shaped member. The inner side panel 48 integrally has a first vertical wall portion 48A extending in the vertical direction, a first horizontal wall portion 48B bent from the lower end of the first vertical wall portion 48A and extending toward the vehicle transverse direction outer side, a second vertical wall portion 48C bent from the vehicle transverse direction outer side end portion of the first horizontal wall portion 48B and extending downward, and a second horizontal wall portion 48D bent from the lower end of the second vertical wall portion 48C and extending toward the vehicle transverse direction outer side.

The outer side surface of the upper end portion of the first vertical wall portion 48A planarly contacts the inner side surface of an upper side flange portion 49A of the outer side panel 49 that is described later. Further, the outer side surface of the upper end portion of the first vertical wall portion 48A is joined by welding to the inner side surface of the upper side flange portion 49A of the outer side panel 49. A portion of the inner side surface of the first vertical wall portion 48A planarly contacts the outer side surface of the rocker inner 41. Further, a through-hole (no reference numeral given thereto) that passes-through in the vehicle transverse direction is formed in the lower portion of the first vertical wall portion 48A, and the rocker bolt 43 is inserted through this through-hole. The first vertical wall portion 48A and the rocker inner 41 are joined by the rocker bolt 43 and the rocker nut 44. A portion of the outer side surface of the first vertical wall portion 48A planarly contacts the vehicle transverse direction inner side surface of the energy absorbing body 80. A portion of the outer side surface of the first vertical wall portion 48A is joined to the vehicle transverse direction inner side surface of the energy absorbing body 80.

The outer side surface of the second vertical wall portion 48C planarly contacts the inner side surface of a lower side flange portion 49E of the outer side panel 49 that is described later. Further, the outer side surface of the second vertical wall portion 48C is joined by welding to the inner side surface of the lower side flange portion 49E of the outer side panel 49 that is described later. Moreover, a high-voltage hose 81 that is connected to an air conditioner (not illustrated) is fixed to the inner side surface of the second vertical wall portion 48C.

The lower side surface of the second horizontal wall portion 48D planarly contacts the upper surface of the underpanel 50. Namely, the second horizontal wall portion 48D abuts the underpanel 50 from the vertical direction. Further, a through-hole (no reference numeral given thereto) that passes-through in the vertical direction is formed in the second horizontal wall portion 48D. A bolt 52 is inserted through this through-hole. The second horizontal wall portion 48D and the underpanel 50 are joined by the bolt 52 and a nut 53 that is screwed together with the distal end of the bolt 52.

The outer side panel 49 is a plate-shaped member. The outer side panel 49 integrally has the upper side flange portion 49A that extends in the vertical direction, an upper side inclined portion 49B that is bent from the lower end of the upper side flange portion 49A and extends toward the vehicle transverse direction outer side and the lower side, a vertical wall portion 49C that is bent from the vehicle transverse direction outer side end of the upper side inclined portion 49B and extends toward the vehicle lower side, a lower side inclined portion 49D that is bent from the lower end of the vertical wall portion 49C and extends toward the vehicle transverse direction inner side and the lower side, and the lower side flange portion 49E that is bent from the vehicle transverse direction inner side end of the lower side inclined portion 49D and extends downward.

The inner side surface of the upper side flange portion 49A planarly contacts the outer side surface of the upper end portion of the first vertical wall portion 48A of the inner side panel 48. Further, the inner side surface of the upper side flange portion 49A is joined by welding to the outer side surface of the upper end portion of the first vertical wall portion 48A of the inner side panel 48.

The vertical wall portion 49C faces the first vertical wall portion 48A of the inner side panel 48. A portion of the inner side surface of the vertical wall portion 49C planarly contacts the vehicle transverse direction outer side surface of the energy absorbing body 80. A portion of the inner side surface of the vertical wall portion 49C is joined to the vehicle transverse direction outer side surface of the energy absorbing body 80.

The inner side surface of the lower side flange portion 49E planarly contacts the outer side surface of the second vertical wall portion 48C of the inner side panel 48. Further, the inner side surface of the lower side flange portion 49E is joined by welding to the outer side surface of the second vertical wall portion 48C of the inner side panel 48.

In this way, the outer side space S2, whose cross-section (the cross-section cut along a plane orthogonal to the longitudinal direction) is a closed cross-section, is provided at the rocker outer 42 between the first vertical wall portion 48A, the first horizontal wall portion 48B and the upper portion of the second vertical wall portion 48C of the inner side panel 48, and the upper side inclined portion 49B, the vertical wall portion 49C and the lower side inclined portion 49D of the outer side panel 49. Namely, the first vertical wall portion 48A, the first horizontal wall portion 48B and the upper portion of the second vertical wall portion 48B of the inner side panel 48, and the upper side inclined portion 49B, the vertical wall portion 49C and the lower side inclined portion 49D of the outer side panel 49, structure a closed cross-sectional portion 42A that is hollow. Further, the lower portion of the second vertical wall portion (vertical wall portion) 48C and the second horizontal wall portion (horizontal wall portion) 48D of the inner side panel 48 structure a flange portion 42B that is plate-shaped and is provided at the lower side of the closed cross-sectional portion 42A.

As illustrated in Fig. 2 and Fig. 3, the battery pack 30 has plural battery cells 31, a battery case 32 accommodating the battery cells 31 at the interior thereof, and a junction box 33 provided at the upper surface of the battery case 32.

The battery cells 31 are lithium ion batteries that can be used as a power source installed in a vehicle. The plural battery cells 31 are disposed so as to be lined-up at a predetermined interval along the vehicle longitudinal direction. An assembled battery is structured by the plural battery cells 31 being combined.

A battery accommodation space S3 that accommodates the battery cells 31 at the interior thereof is provided in the battery case 32. The battery case 32 has an upper cover 35 defining the upper side of the accommodation space S3, and a lower case 36 defining the lower side of the accommodation space S3.

The upper cover 35 integrally has a lid portion (accommodation space definition portion) 35A that covers the battery cells 31 from the upper side, upper-side side wall portions (accommodation space definition portions) 35B that are bent from the vehicle transverse direction outer side ends of the lid portion 35A and extend downward, and upper side flange portions (projecting portions) 35C that are plate-shaped and extend toward the vehicle transverse direction outer sides from the lower ends of the upper-side side wall portions 35B.

The lid portion 35A prescribes the upper side of the battery accommodation space S3. The upper-side side wall portions 35B prescribe the upper portions of the vehicle transverse direction outer sides of the battery accommodation space S3. The upper-side side wall portions 35B cover the battery cells 31 from the vehicle transverse direction outer sides. The upper side flange portions 35C project toward the vehicle transverse direction outer sides from the upper-side side wall portions 35B.

The lower case 36 integrally has a bottom wall portion (accommodation space definition portion) 36A that covers the battery cells 31 from the lower side, lower-side side wall portions (accommodation space definition portions) 36B that are bent from the vehicle transverse direction outer side ends of the bottom wall portion 36A and extend upward, and lower side flange portions (projecting portions) 36C that are plate-shaped and extend toward the vehicle transverse direction outer sides from the vehicle transverse direction outer side end portions of the lower-side side wall portions 36B.

The bottom wall portion 36A prescribes the lower side of the battery accommodation space S3. The lower-side side wall portions 36B prescribe the lower portions of the vehicle transverse direction outer sides of the battery accommodation space S3. The lower-side side wall portions 36B cover the battery cells 31 from the vehicle transverse direction outer sides. The lower side flange portions 36C project toward the vehicle transverse direction outer sides from the lower-side side wall portions 36B.

The lid portion 35A and the upper-side side wall portions 35B of the upper cover 35 are provided further toward the vehicle transverse direction inner sides than the rocker inners 41. Further, the bottom wall portion 36A and the lower-side side wall portions 36B of the lower case 36 are provided further toward the vehicle transverse direction inner sides than the rocker inners 41. In this way, in the present embodiment, what is disposed between the pair of rocker portions 40 is a portion of the battery case 32. Specifically, the accommodation space definition portions (the lid portion 35A, the upper-side side wall portions 35B, the bottom wall portion 36A and the lower-side side wall portions 36B) of the battery case 32 are provided between the pair of rocker portions 40. On the other hand, the upper side flange portions 35C and the lower side flange portions 36C of the battery case 32 are not disposed between the pair of rocker portions 40.

The upper side flange portions 35C of the upper cover 35 and the lower side flange portions 36C of the lower case 36 are provided at the lower sides of the rocker inners 41. Further, the lower surfaces of the upper side flange portions 35C and the upper surfaces of the lower side flange portions 36C planarly contact one another. Through-holes (no reference numerals given thereto) that pass through in the vertical direction are formed respectively in the upper side flange portions 35C and the lower side flange portions 36C. The through-holes of the upper side flange portions 35C and the through-holes of the lower side flange portions 36C are provided so as to be superposed one on the other as seen in the vertical direction, and joining members 90 are inserted through these two through-holes. The upper side flange portions 35C and the lower side flange portions 36C are joined by these joining members 90.

The joining members 90 extend in the vertical direction and pass through plural members. In detail, the joining member 90 passes through the rocker molding 70, the underpanel 50, the lower side flange portion 36C, the upper side flange portion 35C, and the lower side wall portion 41B in that order from the lower side. Namely, the joining member 90 joins the rocker molding 70, the underpanel 50, the battery case 32 with the rocker portion 40. The distal end of the joining member 90 is positioned in the lower side space S1.

As described above, the joining member 90 joins the battery case 32 and the rocker portion 40 (in detail, the rocker inner 41). Joint portion 100 (the portion joined to the rocker portion 40) of the battery case 32 is provided at the upper side flange portion 35C and the lower side flange portion 36C. In detail, the joint portion 100 is, of the upper side flange portion 35C and the lower side flange portion 36C, the portions through which the joining member 90 is inserted. The joint portion 100 is provided further toward the vehicle transverse direction inner side than the rocker outer 42.

The underpanel 50 is a plate-shaped member, and covers the battery case 32 and the pair of rocker portions 40 from the vehicle lower side. The vehicle transverse direction outer side end portion of the underpanel 50 is positioned at the lower side of the outer side panel 49 of the rocker outer 42. The upper surface of the vehicle transverse direction outer side end portion of the underpanel 50 planarly contacts the lower surface of the second horizontal wall portion 48D of the inner side panel 48. Through-holes (no reference numeral given thereto) that pass through in the vertical direction are formed respectively in the vehicle transverse direction outer side end portion of the underpanel 50 and the second horizontal wall portion 48D. The through-hole of the vehicle transverse direction outer side end portion of the underpanel 50 and the through-hole of the second horizontal wall portion 48D are provided so as to be superposed one on the other as seen in the vertical direction, and the bolt 52 is inserted-through these two through-holes from the lower side. The underpanel 50 and the rocker outer 42 (in detail, the inner side panel 48) are joined by the bolt 52 and the nut 53 that is screwed together with the distal end of the bolt 52.

A portion of the underpanel 50 (in detail, the portion between the lower-side side wall portion 36B of the battery case 32 and the inner side panel 48) structures a portion of the accommodation portion 60. A high-voltage cable accommodation case 63 is fixed to the upper surface of the portion structuring the accommodation portion 60.

The lower surface of the underpanel 50 planarly contacts the upper surface of the rocker molding 70. Work holes (no reference numeral given thereto) that pass through in the vertical direction are respectively formed in the underpanel 50 and the rocker molding 70. The work hole of the underpanel 50 and the through-hole of the rocker molding 70 are provided so as to be superposed one on the other as seen in the vertical direction. The joining member 90 is inserted through the work hole and the through-hole. The underpanel 50 and the rocker molding 70 are joined by the joining member 90. The joining member 90 is a joining member that joins the battery case 32 and the rocker portion 40, and also serves as a mounting member that mounts the rocker molding 70 to the underpanel 50.

The diameter of the work hole formed in the underpanel 50 is formed to be larger than the outer diameter of the joining member 90. In detail, the diameter of the work hole is a length of an extent such that, in the state in which the joining member 90 is inserted through, the work of joining the upper side flange portion 35C of the upper cover 35 and the lower side flange portion 36C of the lower case 36 that are positioned above the work hole can be carried out via the work hole.

The accommodation space S4 is provided in the accommodation portion 60. The accommodation space S4 is provided between the battery case 32 and the rocker portion 40. In detail, the accommodation space S4 is provided between the lower-side side wall portion 36B of the battery case 32 and the rocker outer 42 of the rocker portion 40. In further detail, the accommodation space S4 is provided further toward the vehicle transverse direction inner side than the joint portion 100. The accommodation space S4 is provided further toward the lower side than the joint portion 100. The accommodation space S4 is provided at the upper side of the underpanel 50. Further, the accommodation space S4 is provided at the lower side of the rocker inner 41. Moreover, the accommodation space S4 is provided at the vehicle transverse direction inner side of the rocker outer 42.

The accommodation space S4 is a space surrounded by the lower side flange portion 36B of the lower case 36, the lower-side side wall portion 36C of the lower case 36, and the underpanel 50, and is a space that is further toward the vehicle transverse direction inner side than the joint portion 100. In detail, the upper side of the accommodation space S4 is prescribed by the lower side flange portion 36B. Further, the vehicle transverse direction inner side of the accommodation space S4 is prescribed by the lower-side side wall portion 36B. Moreover, the lower side of the accommodation space S4 is prescribed by the underpanel 50. In addition, the vehicle transverse direction outer side of the accommodation space S4 is covered by the rocker portion 40 (in detail, the rocker outer 42).

The accommodation portion 60 prescribes the accommodation space S4. Accordingly, the lower side flange portion 36B, the lower-side side wall portion 36B and the underpanel 50 are included in the accommodation portion 60.

Two high-voltage cables (accommodated objects) 62 that extend in the vehicle longitudinal direction are accommodated in the accommodation space S4. The two high-voltage cables 62 are disposed so as to be lined-up in the vertical direction. The two high-voltage cables 62 are disposed in the accommodation space S4 in a state of being accommodated in the high-voltage cable accommodation case 63.

The rocker molding 70 covers the underpanel 50 from the vehicle transverse direction outer side. Further, the rocker molding 70 covers the rocker portion 40 from the vehicle transverse direction outer side. The upper end portion of the rocker molding 70 planarly contacts the outer surface of the upper side flange portion 49A of the outer side panel 49 of the rocker outer 42. The lower end portion of the rocker molding 70 planarly contacts the lower surface of the underpanel 50.

### [Operation/Effects]

In the present embodiment, the accommodation portion 60 is provided between the battery case 32 and the rocker portion 40. Namely, the accommodation portion 60 is provided at the vehicle transverse direction outer side of the battery case 32. Due thereto, there is no need to provide the accommodation portion 60 at the vehicle upper portion of the battery case 32. Accordingly, as compared with a case in which the accommodation portion 60 is provided at the upper portion of the battery case 32, the length of the battery case 32 in the vehicle vertical direction can be made shorter. Consequently, the battery case 32 can be made to be compact. As a result, the vehicle lower portion structure can be made to be compact.

Further, in the present embodiment, the accommodation portion 60 is provided further toward the vehicle transverse direction inner side than the joint portion 100 of the rocker portion 40 and the battery case 32. In a case in which a colliding body collides with a lateral side portion (in other words, a vehicle transverse direction outer side portion) of the vehicle (hereinafter called "at the time of a side collision"), the collision load is inputted to the rocker portion 40. The rocker portion 40 to which load is inputted is pressed toward the vehicle transverse direction inner side, but the movement thereof toward the vehicle transverse direction inner side is suppressed at the joint portion 100. In this way, movement of the rocker portion 40 toward the vehicle transverse direction inner side is suppressed at the joint portion 100 that is provided further toward the vehicle transverse direction outer side than the accommodation portion 60, and therefore, pressing of the accommodation space S4 (in detail, the accommodation portion 60 in which the accommodation space S4 is provided) by the rocker portion 40 can be suppressed. Accordingly, deformation of the accommodation portion 60 can be suppressed. Consequently, the high-voltage cables 62 accommodated in the accommodation portion 60 can be protected.

Further, in the present embodiment, the underpanel 50 covers the battery case 32 and the rocker portion 40 from the vehicle lower side, and the accommodation portion 60 is provided between the battery case 32 and the rocker portion 40. In this way, in the present embodiment, the vehicle transverse direction outer side end portion of the underpanel 50 is positioned further toward the vehicle transverse direction outer side than the accommodation portion 60. Due thereto, at the time of a side collision, the collision load is inputted to the underpanel 50 before the accommodation portion 60. Because some of the collision load is inputted to the underpanel 50 in this way, the collision load that is inputted to the accommodation portion 60 can be reduced, and therefore, deformation of the accommodation portion 60 can be suppressed. Accordingly, the high-voltage cables 62 accommodated in the accommodation portion 60 can be protected.

Further, in the present embodiment, the underpanel 50 covers the battery case 32 and the pair of rocker portions 40 from the vehicle lower side. Due thereto, the lower portion of the vehicle is covered by a single member (the underpanel 50). Therefore, the flow of the air that flows along the lower portion of the vehicle is adjusted. Accordingly, the aerodynamic performance of the vehicle can be improved.

In the present embodiment, the underpanel 50 is joined to the lower portions of the rocker portions 40. Due thereto, at the time of a side collision, movement of the rocker portion 40 toward the vehicle transverse direction inner side is suppressed by the underpanel 50 as well. Accordingly, it is more difficult for the rocker portion 40 and the accommodation portion 60 to interfere with one another. Consequently, deformation of the accommodation portion 60 is suppressed more, and the high-voltage cables 62 accommodated in the accommodation portion 60 can be protected more effectively.

In the present embodiment, the rocker portion 40 has the closed cross-sectional portion 42A that is hollow (the portion at which a closed cross-section is formed by the inner side panel 48 and the outer side panel 49), and the flange portion 42B (the second horizontal wall portion 48D and the like) that is provided at the lower side of the closed cross-sectional portion 42A. At the time of a side collision, the closed cross-sectional portion 42A of the rocker portion 40 is displaced so as to be crushed, and absorbs the impact. In this way, the closed cross-sectional portion 42A is displaced relatively greatly. On the other hand, the flange portion 42B is plate-shaped, and therefore, the displacement thereof is relatively small. In the present embodiment, the underpanel 50 is joined to the flange portion 42B whose displacement is relatively small at the time of a side collision. Due thereto, at the time of a side collision, movement of the rocker portion 40 toward the vehicle transverse direction inner side can be suppressed more effectively. Consequently, interference between the rocker portion 40 and the accommodation portion 60 can be suppressed more effectively, and therefore, deformation of the accommodation portion 60 can be suppressed more effectively. Consequently, the high-voltage cables 62 accommodated in the accommodation portion 60 can be protected more effectively.

In the present embodiment, the second horizontal wall portion 48D that extends in the vehicle transverse direction is joined to the underpanel 50. The rigidity, with respect to load in the vehicle transverse direction, of the second horizontal wall portion 48D is relatively high. Therefore, the rigidity of the joint portion 100 of the underpanel 50 and the rocker portion 40, which joint portion 100 is provided at the second horizontal wall portion 48D, can be improved. Accordingly, movement of the rocker portion 40 toward the vehicle transverse direction inner side can be suppressed more effectively. Consequently, interference between the rocker portion 40 and the accommodation portion 60 can be suppressed more effectively, and therefore, deformation of the accommodation portion 60 can be suppressed more effectively. Consequently, the high-voltage cables 62 accommodated in the accommodation portion 60 can be protected more effectively.

In the present embodiment, the accommodation portion 60 is provided at the vehicle lower side of the rocker inner 41. Further, in the present embodiment, the accommodation portion 60 is provided at the vehicle transverse direction inner side of the rocker outer 42. In this way, the vehicle upper side of the accommodation portion 60 is covered by the rocker inner 41, and the vehicle transverse direction outer side of the accommodation portion 60 is covered by the rocker outer 42. Accordingly, deformation of the accommodation portion 60 can be suppressed more effectively. Consequently, the high-voltage cables 62 accommodated in the accommodation portion 60 can be protected more effectively.

In the present embodiment, the bending rigidity of the rocker inner 41 is set to be higher than the bending rigidity of the rocker outer 42. Due thereto, at the time of a side collision, the rocker outer 42 whose a bending rigidity is low deforms before the rocker inner 41 and carries out impact absorption. Accordingly, because the load transmitted to the accommodation portion 60 that is provided at the lower side of the rocker inner 41 is reduced, deformation of the accommodation portion 60 can be suppressed more effectively. Consequently, the high-voltage cables 62 accommodated in the accommodation portion 60 can be protected more effectively.

In the present embodiment, the joint portion 100 of the battery case 32 and the rocker portion 40 is provided further toward the vehicle transverse direction inner side than the rocker outer 42. Due thereto, at the time of a side collision, after the rocker outer 42 has absorbed impact, movement of the rocker portion 40 toward the vehicle transverse direction inner side is suppressed at the joint portion 100. Accordingly, the load inputted to the joint portion 100 can be suppressed, and therefore, movement of the rocker portion 40 can be suppressed more effectively. Thus, interference between the rocker portion 40 and the accommodation portion 60 can be suppressed. Accordingly, deformation of the accommodation portion 60 can be suppressed. Consequently, the high-voltage cables 62 accommodated in the accommodation portion 60 can be protected.

In the present embodiment, the battery case 32 and the rocker inner 41 are joined by the joining member 90 that is inserted through the through-hole of the underpanel 50. Due thereto, at the time of a side collision, the load inputted to the underpanel 50 is inputted to the battery case 32 via the joining member 90. Accordingly, at the time of a side collision, deformation of the underpanel 50 can be suppressed, and therefore, accompanying this, deformation of the accommodation portion 60 can be suppressed. Accordingly, the high-voltage cables 62 accommodated in the accommodation portion 60 can be protected.

Further, in the present embodiment, the diameter of the through-hole is larger than the diameter of the joining member 90. Namely, a gap is formed between the edge of the through-hole and the joining member 90. Due thereto, the work of joining the battery case 32 and the rocker inner 41 can be carried out through this gap via the battery case 32 and the rocker inner 41. Accordingly, the work of joining the battery case 32 and the rocker inner 41 can be carried out in the state in which the battery case 32 and the underpanel 50 are fixed. Consequently, the work of assembling the vehicle lower portion structure can be facilitated.

In the present embodiment, the rocker molding 70 that covers the underpanel 50 from the vehicle transverse direction outer side is provided. Due thereto, the lower side of the accommodation portion 60 is covered by the underpanel 50, and the vehicle transverse direction outer side of the accommodation portion 60 is covered by the rocker molding 70. Accordingly, the high-voltage cables 62 accommodated in the accommodation portion 60 can be protected from, for example, water drops on the road or the like.

It is easy for impact to be inputted to the vehicle transverse direction outer side of the battery case 32 at the time of a side collision. On the other hand, as described above, in the present embodiment, damage to the high-voltage cables 62 at the time of a side collision can be suppressed. Due thereto, even in a case in which the high-voltage cables 62 are accommodated in the accommodation portion 60 that is at the vehicle transverse direction outer side of the battery case 32, the high-voltage cables 62 can be protected, and safety can be improved.

In the present embodiment, the accommodation portion 60 is provided further toward the vehicle transverse direction inner side and the lower side than the joint portion 100. Due thereto, the battery case 32 can be joined to the rocker portion 40 in a state in which the high-voltage cables 62 have been accommodated in the accommodation portion 60 in advance and the underpanel 50 has been mounted to the battery case 32. Accordingly, the work of assembling the vehicle lower portion structure can be simplified.

Although the vehicle lower portion structure relating to an embodiment has been described above, the design of the present disclosure can be changed appropriately within a scope that does not depart from the gist thereof.

For example, although the above embodiment describes an example in which the high-voltage cables 62 are accommodated in the accommodation portion 60, the present disclosure is not limited to this. It suffices for the member that is accommodated in the accommodation portion 60 to be a member that extends in the vehicle longitudinal direction, and, for example, the member may be a harness, an air suspension hose, a brake hose, or the like. Further, in a case in which the present disclosure is applied to a PHEV, the member may be an exhaust pipe through which exhaust gas that is exhausted from the engine flows.

Further, the methods of joining the members together are not limited to the methods in the above description. For example, members that are joined by bolts and nuts may be joined by welding. Conversely, members that are joined by welding may be joined by bolts and nuts.

Moreover, although the above embodiment describes a case in which the pair of rocker portions 40 have plane symmetry across the vertical plane at the vehicle transverse direction center, the present disclosure is not limited to this. For example, the pair of rocker portions 40 may be provided such that the positions and shapes thereof do not have plane symmetry across that plane.

Further, although the above embodiment describes an example in which the high-voltage cables 62 are accommodated in the accommodation portion 60 in a state of being accommodated in the high-voltage cable accommodation case 63, the present disclosure is not limited to this. For example, the high-voltage cables 62 may be accommodated in the accommodation portion 60 in a state of not being accommodated in a case or the like.

## Claims

1. A vehicle lower portion structure, comprising:
a pair of rocker portions (40) extending in a vehicle longitudinal direction and separated from one another in a vehicle transverse direction;
a battery case (32) that has joint portions (100) joined to the rocker portions (40), that is disposed between the pair of rocker portions (40), and in which battery cells (31) are accommodated;
an underpanel (50) covering the battery case (32) and the pair of rocker portions (40) from a vehicle lower side; and
accommodation portions (60) provided between the battery case (32) and the rocker portions (40), further toward vehicle transverse direction inner sides than the joint portions (100) and at an upper side of the underpanel (50),
wherein accommodated objects (62) that extend in the vehicle longitudinal direction are accommodated in the accommodation portions (60).

2. The vehicle lower portion structure of claim 1, wherein the underpanel (50) is joined to the rocker portions (40).

3. The vehicle lower portion structure of claim 2, wherein:
the rocker portions (40) have:
closed cross-sectional portions (42A) that are hollow and whose cross-sections, as sectioned along planes orthogonal to the vehicle longitudinal direction, are closed cross-sections, and
flange portions (42B) that are plate-shaped and that are provided at lower sides of the closed cross-sectional portions (42A), and
the underpanel (50) is joined to the flange portions (42B).

4. The vehicle lower portion structure of claim 3, wherein:
the flange portions (42B) have vertical wall portions (48C) extending in a vehicle vertical direction, and horizontal wall portions (48D) extending in the vehicle transverse direction from the vertical wall portions (48C), and
the underpanel (50) is joined to the horizontal wall portions (48D).

5. The vehicle lower portion structure according to any one of claims 1 to 4, wherein:
the rocker portions (40) have rocker inners (41) and rocker outers (42) provided further toward vehicle transverse direction outer sides than the rocker inners (41),
lower end portions of the rocker outers (42) are disposed further toward a vehicle lower side than lower end portions of the rocker inners (41),
the accommodation portions (60) are provided at vehicle lower sides of the rocker inners (41) and at vehicle transverse direction inner sides of the rocker outers (42), and
end portions of the underpanel (50) are joined to lower portions of the rocker outers (42).

6. The vehicle lower portion structure of claim 5, wherein a bending rigidity of the rocker inners (41) is higher than a bending rigidity of the rocker outers (42).

7. The vehicle lower portion structure of claim 5 or 6, wherein the joint portions (100) of the battery case (32) are provided further toward vehicle transverse direction inner sides than the rocker outers (42).

8. The vehicle lower portion structure of claim 7, comprising joining members (90) that join the battery case (32) with the rocker inners (41), wherein:
the joining members (90) are inserted, from a vehicle lower side, through through-holes formed in the underpanel (50), and
a diameter of the through-holes is larger than a diameter of the joining members (90).

9. The vehicle lower portion structure of claim 8, comprising rocker moldings (70) covering the underpanel (50) from vehicle transverse direction outer sides,
wherein the joining members (90) also serve as mounting members that mount the rocker moldings (70) to the underpanel (50).

10. The vehicle lower portion structure according to any one of claims 1 to 9, wherein the accommodated objects (62) have cables.

11. The vehicle lower portion structure according to any one of claims 1 to 10, wherein the accommodation portions (60) are provided further toward vehicle transverse direction inner sides and a vehicle lower side than the joint portions (100).

12. The vehicle lower portion structure according to any one of claims 1 to 11, wherein:
the battery case (32) has an accommodation space definition portion (35A) that defines a battery accommodation space (S3) in which the battery cells (31) are accommodated, and projecting portions (35C) projecting toward vehicle transverse direction outer sides from the accommodation space definition portion (35A), and
the joint portions (100) are provided at the projecting portions (35C).
